(19) Europäisches Patentamt
European Patent Office
Office européen des brevets

(11) Veröffentlichungsnummer: **0 283 896 B1**

(12) **EUROPÄISCHE PATENTSCHRIFT**

(45) Veröffentlichungstag der Patentschrift: **19.02.92**

(51) Int. Cl.$^5$: **C03C 25/02**, C09D 183/00, C08G 77/38

(21) Anmeldenummer: **88104031.5**

(22) Anmeldetag: **14.03.88**

(54) **Optische Glasfaser mit einer Primärbeschichtung aus acrylsäureestergruppenhaltigen Organopolysiloxanen.**

(30) Priorität: **27.03.87 DE 3710206**

(43) Veröffentlichungstag der Anmeldung:
**28.09.88 Patentblatt 88/39**

(45) Bekanntmachung des Hinweises auf die Patenterteilung:
**19.02.92 Patentblatt 92/08**

(84) Benannte Vertragsstaaten:
**AT BE CH DE FR GB IT LI NL SE**

(56) Entgegenhaltungen:
**EP-A- 0 159 729**
**EP-A- 0 168 713**
**EP-A- 0 223 600**
**GB-A- 2 041 389**

(73) Patentinhaber: **SIEMENS AKTIENGESELLSCHAFT**
**Wittelsbacherplatz 2**
**W-8000 München 2(DE)**

(72) Erfinder: **Markert, Helmut, Dr.**
**Lohengrinstrasse 17**
**W-8500 Nürnberg(DE)**
Erfinder: **Rogler, Wolfgang, Dr.**
**Frankenstrasse 44**
**W-8521 Möhrendorf(DE)**
Erfinder: **Koerner, Götz, Dr.**
**Kantorie 126**
**W-4300 Essen(DE)**
Erfinder: **Weitemeyer, Christian, Dr.**
**Sundernholz 67**
**W-4300 Essen(DE)**
Erfinder: **Wewers, Dietmar, Dr.**
**Fernewaldstrasse 194**
**W-4250 Bottrop(DE)**

EP 0 283 896 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine optische Glasfaser mit einer Primärbeschichtung, welche wenigstens teilweise aus acrylsäureestergruppenhaltigen, an Silicium gebundene Alkylgruppen aufweisenden Organopolysiloxanen besteht, wobei die bei Applikationstemperatur flüssigen Organopolysiloxane durch energiereiche Strahlung polymerisiert sind.

Optische Glasfasern werden bereits bei ihrer Herstellung mit Kunststoffen ummantelt. Diese Kunststoff-Beschichtungsmittel haben die Aufgabe, die Glasfasern - unter Erhalt ihrer physikalischen, insbesondere optischen Eigenschaften - vor mechanischen und chemischen Umwelteinflüssen zu schützen. Um diese komplexen Anforderungen zu erfüllen, werden die Glasfasern im allgemeinen mit zwei Schichten unterschiedlicher Art und Eigenschaften ummantelt.

Die erste, d.h. die innere Ummantelungsschicht (Primärbeschichtung) ist im allgemeinen weich und kautschukelastisch. Sie dient zum Erhalt der den Glasfasern inhärenten mechanischen Festigkeit und schützt sie vor Mikrobiegungen und hierdurch bedingten Dämpfungsverlusten. Die Primärbeschichtung soll deshalb eine Glasübergangstemperatur von < -40 °C aufweisen und ihre mechanischen Eigenschaften innerhalb des Einsatztemperaturbereiches von -40 bis +80 °C möglichst wenig ändern, damit innerhalb dieser Temperaturgrenzen ein konstantes Dämpfungsverhalten der beschichteten Glasfasern sichergestellt ist. Der Elastizitätsmodul der Beschichtung soll möglichst ≦ 10 $N/mm^2$ betragen. In vielen Fällen wird auch gefordert, daß der Brechungsindex der Beschichtungsmasse höher als derjenige der äußeren Schicht der Glasfaser ist. Berücksichtigt man, daß der Brechungsindex $n_D^{25}$ von Quarzglas zwischen 1,45 und 1,46 liegt, so ergibt sich hieraus für die innere Beschichtungsmasse ein Brechungsindex von > 1,46 innerhalb des Einsatztemperaturbereiches.

Die zweite, d.h. die äußere Kunststoffummantelungsschicht hat im wesentlichen die Aufgabe, die mit der ersten Kunststoffschicht ummantelte Glasfaser vor mechanischen und chemischen Einflüssen der Umgebung, insbesondere vor der Einwirkung von Feuchtigkeit und vor mechanischem Abrieb, zu schützen. Diese Beschichtung ist deshalb mechanisch härter eingestellt.

Die Beschichtungsmassen werden auf die Glasfasern bei deren Herstellung aufgebracht. Da der Ziehprozeß mit Geschwindigkeiten von > 5 m/s ablaufen kann und als Beschichtungsmassen härtbare Kunststoffe oder Kunststoffzubereitungen verwendet werden, muß die Aushärtung der Kunststoffe bzw. Kunststoffzubereitungen in weniger als 1 s, vorzugsweise in < 0,5 s, erfolgen.

Es sind bereits viele Ausführungsformen einer Zweifachbeschichtung bekannt. Dabei handelt es sich vor allem um UV-härtbare Urethanacrylate, und zwar sowohl zur Ausbildung der Primär- als auch der Sekundärbeschichtung. Derartige Beschichtungen mit Urethanacrylaten sind beispielsweise in der DE-AS 34 37 531 und der EP-A-0 111 280 beschrieben. Diese Materialien vereinigen in sich aber nicht das geforderte komplexe Eigenschaftsbild. Dagegen haben sich in den letzten Jahren mit Acrylsäureestergruppen modifizierte Organopolysiloxane als weitgehend brauchbar erwiesen. Bei geeigneter Konstitution ergeben diese Polymeren nach der Aushärtung, die mit UV-Strahlung in der geforderten Zeit von < 0,5 s möglich ist, weich-elastische Beschichtungen der gewünschten Art.

Eine Glasfaser mit einer derartigen Primärummantelung ist in der EP-A1-0 155 051 beschrieben. Die Glasfaser ist dabei mit einer Umhüllungsschicht mit einer Brechungszahl, die höher als die der äußeren Schicht der Glasfaser ist, versehen. Die Umhüllungsschicht ist aus einer härtbaren Kunststoffzusammensetzung gebildet, die ein Copolymer enthält, das als monomere Einheiten Dimethylsiloxan und mindestens ein Siloxan aus der Gruppe Methyl-Phenylsiloxan und Diphenylsiloxan aufweist. Das Copolymer selbst ist eine Verbindung mit der folgenden Zusammensetzung:

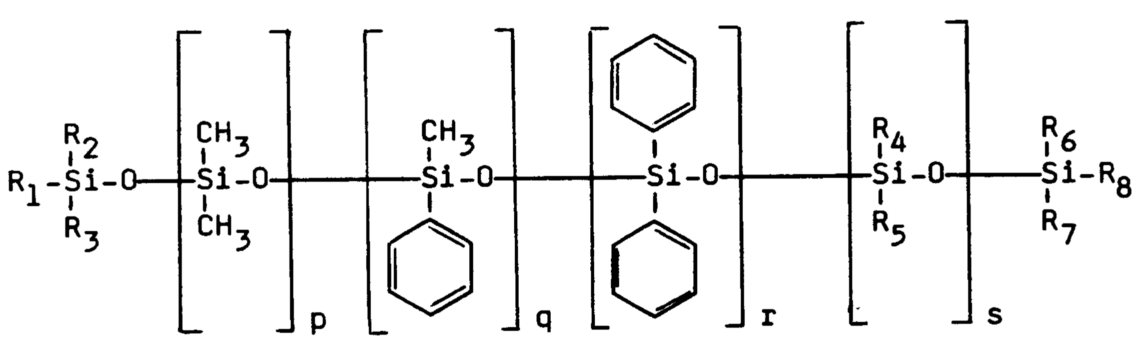
,

worin $R_1$ und $R_8$ Alkyl-, Aryl- und acrylathaltige Alkylgruppen, $R_2$, $R_3$, $R_4$, $R_6$ und $R_7$ Alkyl- und

Arylgruppen sind, und $R_5$ eine acrylathaltige organische Gruppe ist, das mittlere Molekulargewicht der Polymermoleküle zwischen 1000 und 1 000 000 liegt, und die mittleren Fraktionen der monomeren Einheiten je Polymermolekül innerhalb der folgenden Grenzen liegen:

$0{,}005 \leqq p \leqq 0{,}995$

$0 \leqq q \leqq 0{,}995$

$0 \leqq r \leqq 0{,}49$

$0 \leqq s \leqq 0{,}1$ ,

wobei $0{,}005 \leqq (q+2r) \leqq 0{,}955$ ist und die monomeren Einheiten blockweise, alternierend oder beliebig im Molekül verteilt sein können, und wobei das Copolymer mindestens zwei Acrylatgruppen je Molekül enthält.

Die acrylathaltige Alkylgruppe ist eine Gruppe der Formel $-R_9OCOCH=CH_2$, wobei $R_9$ ein Alkylenrest, beispielsweise die Gruppe $-(CH_2)_n-$ mit $n \geqq 1$, ist. Die Beschichtungsmaterialien sind somit entsprechend dieser Definition mit Monoacrylatgruppen funktionalisiert, die über eine Si-C-Bindung mit der Siloxankette verknüpft sind.

In der veröffentlichten internationalen Patentanmeldung WO 84/00424 sind Siliconacrylate als Primärbeschichtungsmaterialien beschrieben, die ein Molekulargewicht von 500 bis 5000 besitzen und 2 bis 6 Monoacrylatgruppen aufweisen. Diese Monoacrylatgruppen sind vorzugsweise über Si-C-Bindungen mit der Siloxankette verknüpft. Siliconacrylate mit einer Si-O-C-Verknüpfung werden im Hinblick auf mögliche Hydrolysereaktionen als weniger geeignet angesehen, da ein etwaiger hydrolytischer Abbau des Beschichtungsmaterials - über sich ändernde mechanische Eigenschaften - zu einer Änderung des Dämpfungsverhaltens und damit zu einem ungenügenden Langzeitverhalten der optischen Faser führen würde.

Die aus dem Stand der Technik bekannten, mit Acrylsäureestergruppen modifizierten Organopolysiloxane werden in der Weise hergestellt, daß zunächst reaktive Gruppen aufweisende Organopolysiloxane dargestellt und mit organischen Verbindungen, die Acrylsäureestergruppen enthalten, umgesetzt werden. Die Organopolysiloxane weisen neben Si-gebundenen Methylgruppen zur Einstellung der geforderten Brechungszahl eine Mindestmenge von an Si-Atome gebundenen Phenylgruppen auf. Die bekannten Organopolysiloxane werden deshalb durch Cohydrolyse und Cokondensation von Methyl- und Phenylgruppen tragenden Silanen dargestellt. Dabei bilden sich als unvermeidbare Nebenprodukte in wechselnden Mengen cyclische Verbindungen, die, weil sie nicht destillativ abgetrennt werden können, nur mit besonderem Aufwand aus den erhaltenen Organopolysiloxanen entfernt werden könnten. Diese cyclischen Verbindungen sind deshalb nach der Umsetzung mit den Acrylsäureestergruppen enthaltenden Verbindungen als inerte Bestandteile in der Beschichtungsmasse enthalten. Da diese Verbindungen bei der Aushärtung nicht in die polymere Matrix eingebunden werden, können sie im Laufe der Zeit aus der Beschichtungsmasse austreten. Hierdurch ändern sich aber die elastischen Eigenschaften der ausgehärteten Beschichtungsmasse. Ferner können Haftungsstörungen mit der zweiten Ummantelungsschicht auftreten, die zur teilweisen oder völligen Ablösung der zweiten Schicht führen.

Nachteilig bei Organopolysiloxanen mit Si-gebundenen Phenylsubstituenten ist ferner, daß mit zunehmendem Gehalt an Phenylgruppen die Einfriertemperatur der gehärteten Beschichtungsmaterialien zu höheren Temperaturen, d.h. auch zu Temperaturen $>-40\,^\circ C$, verschoben wird. Derartige Organopolysiloxane sind aber für die Beschichtung von optischen Glasfasern nicht geeignet, weil sie zu einer starken Änderung der elastischen Eigenschaften im Einsatztemperaturbereich von optischen Glasfasern führen würden.

Aufgabe der Erfindung ist es, eine optische Glasfaser der eingangs genannten Art mit einer Primärbeschichtung aus Organopolysiloxanen in der Weise auszugestalten, daß die Primärbeschichtung einerseits die bislang auftretenden Nachteile nicht aufweist und frei von inerten, migrationsfähigen Bestandteilen ist, andererseits jedoch alle anderen geforderten Eigenschaften, insbesondere einen hohen Brechungsindex und eine Glasübergangstemperatur unterhalb $-40\,^\circ C$, besitzt.

Insbesondere soll eine Primärbeschichtung geschaffen werden, die einen guten Verbund mit der zweiten Beschichtung aufweist, auch wenn diese nicht auf Basis eines Organopolysiloxans aufgebaut ist, sondern beispielsweise aus geeigneten Polyurethanen besteht; die Beschichtung soll somit eine verbesserte Verträglichkeit mit organischen Beschichtungsmaterialien aufweisen. Darüber hinaus sollen die weichelastischen Eigenschaften der Beschichtungsmasse in einfacher Weise dem geforderten Verwendungszweck entsprechend eingestellt werden können.

Dies wird erfindungsgemäß dadurch erreicht, daß die Organopolysiloxane Verbindungen entsprechend der allgemeinen Formel

$$(R^1_a R^2_b R^3_c)-\underset{\underset{\displaystyle O_{\frac{4-(a+b+c+d)}{2}}}{|}}{Si}-Q_d$$

sind, wobei folgendes gilt:

$R^1$ = Methyl,

$R^2$ = geradkettiger, verzweigter oder cyclischer Alkylrest mit 5 bis 18 Kohlenstoffatomen, der gegebenenfalls mit Halogen substituiert sein kann,

$R^3$ = Aralkyl folgender Struktur:

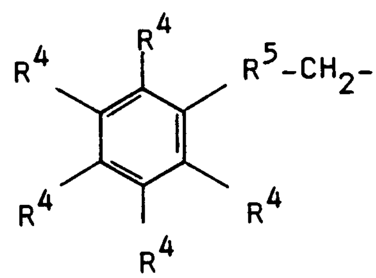

mit

$R^4$ = Wasserstoff und/oder Alkyl mit 1 bis 12 Kohlenstoffatomen und/oder Halogen, und

$R^5$ = Alkylen mit 1 bis 8 Kohlenstoffatomen (geradkettig oder verzweigt),

Q = über das Sauerstoffatom einer um das Wasserstoffatom verminderten Hydroxylgruppe an Silicium gebundener mehrfacher Acryl- und/oder Methacrylsäureester eines Polyols aus der Gruppe Pentaerythrit, Trimethylolethan, Trimethylolpropan und Glycerin sowie deren Dimere und/oder Oxyalkylenderivate mit 1 bis 10 Oxyethylen- und/oder Oxypropyleneinheiten,

$a \geqq 0,9 \geqq b + c$,

b, c = 0 bis 1,1,

$b + c \geqq 0,1$,

$\Sigma$ a, b, c = 1,8 bis 2,2, und

d = 0,001 bis 1,6,

und daß die Organopolysiloxane höchstens 4 Gew.-% an bei 130° C/30 mbar flüchtigen Anteilen enthalten.

Vorzugsweise enthalten die Organopolysiloxane höchstens 2 Gew.-%, besonders bevorzugt höchstens 1 Gew.-%, an Anteilen, die bei 130° C/30 mbar flüchtig sind.

Bei den in den erfindungsgemäßen optischen Glasfasern als Primärbeschichtung dienenden Organopolysiloxanen ist die Anwesenheit des Restes $R^2$ bzw. $R^3$ von besonderer Bedeutung. Der Rest $R^2$ ist ein Alkylrest mit 5 bis 18 Kohlenstoffatomen, der geradkettig, verzweigt oder cyclisch sein kann, wobei geradkettige Alkylreste bevorzugt sind. Da derartige Alkylreste durch Addition von Olefinen an SiH-Gruppen des als Ausgangsverbindung dienenden Siloxans eingeführt werden, ist es auch möglich, daß im durchschnittlichen polymeren Molekül Alkylreste unterschiedlicher Kettenlänge enthalten sind. Der Alkylrest kann ferner mit Halogen substituiert sein, wobei Fluorreste bevorzugt sind. Geeignete Reste $R^2$ sind beispielsweise Pentyl-, Hexyl-, Octyl-, Decyl-, Dodecyl-, Cyclopentylethyl-, Cyclohexylethyl-, Cyclohexenylethyl-, Norbornyl- und Perfluoralkylnorbornylreste.

Neben den Resten $R^2$ oder anstelle dieser Reste weisen die erfindungsgemäßen Organopolysiloxanen Reste $R^3$ auf. Die Reste $R^3$ sind dabei insbesondere $\beta$-Phenylethyl-, $\beta$-Phenylpropyl-,$\gamma$-Phenylpropyl-, o-Methylphenylethyl-, 3,5-Dimethylphenylethyl-,p-Nonylphenylethyl-, o-Bromphenylethyl-, 3,5-Dibromphenylethyl-, p-Chlorphenylethyl- und 3,5-Dichlorphenylethylreste.

Die (Meth-)Acrylsäureestergruppen der Polysiloxane sind Bestandteil des Substituenten Q. Dieser Substituent ist der um das Wasserstoffatom einer Hydroxylgruppe verminderte mehrfache (Meth-)Acrylsäureester eines Polyols (Polyalkohols), wobei als Polyole Pentaerythrit, Trimethylolethan, Trimethylolpropan und Glycerin in Frage kommen. Von den n Hydroxylfunktionen dieser mehrwertigen Alkohole sind maximal n-1 Hydroxylfunktionen mit (Meth-)Acrylsäure verestert. Die verbleibende Hydroxylfunktion dient der Verknüpfung mit dem Organopolysiloxan, so daß der Rest Q mit dem Si-Atom des Polysiloxangerüstes eine Si-O-C-Brücke ausbildet.

Die vorgenannten partiell veresterten Polyalkohole können auch in Form ihrer Dimeren vorliegen, die durch intermolekulare Kondensation erhältlich sind. Die Polyalkohole Pentaerythrit, Trimethylolethan, Trimethylolpropan und Glycerin können vor ihrer Veresterung mit (Meth-)Acrylsäure auch mit Alkylenoxiden, d.h. Ethylenoxid und/oder Propylenoxid, umgesetzt werden, wobei 1 bis 10 derartige Oxyethylen- bzw. Oxypropyleneinheiten angelagert sein können. Der Rest Q kann somit von Pentaerythrittriacrylat, Dipentaerythritpentaacrylat, Trimethylolethandiacrylat, Ditrimethylolethantriacrylat, Trimethylolpropandiacrylat, Ditrimethylolpropantriacrylat, Glycerindiacrylat, Diglycerintriacrylat oder deren Oxyalkylenethern hergeleitet sein.

Die Indices a, b, c und d bestimmen den Gehalt an siliciumgebundenen Kohlenwasserstoffresten, die Menge an Si-O-C-gebundenen (Meth-)Acrylsäureestergruppen sowie den zulässigen Verzweigungsgrad der Organopolysiloxane. Der Index a gibt die Anzahl der an Si-Atome gebundenen Methylreste an: Mindestens 50 % der an Si-Atome gebundenen Kohlenwasserstoffgruppen müssen Methylreste sein. Die Indices b und c geben den Gehalt an den Resten $R^2$ und $R^3$ an. Je höher der Gehalt an den Resten $R^2$ und $R^3$ ist, desto besser ist der Verbund der ersten Beschichtung mit einer zweiten, siloxanfreien Beschichtung. Außerdem werden durch die Gruppen $R^2$ die elastisch-plastischen Eigenschaften der ersten Beschichtung verbessert. Der geforderte Brechungsindex der ersten Beschichtungsmasse läßt sich durch die Art und die Menge der Reste $R^3$ einstellen. Überraschenderweise hat sich auch gezeigt, daß die Einstellung des Brechungsindex mittels der Reste $R^2$ und $R^3$ - im Vergleich zu entsprechenden Dimethylpolysiloxanen - sogar eine Absenkung der Einfriertemperatur ermöglicht.

Durch die Verwendung von Organopolysiloxanen, welche höchstens 4 Gew.-% bei 130 °C/30 mbar flüchtige Anteile enthalten, ist sichergestellt, daß keine flüssigen inerten cyclischen Siloxane vorhanden sind, die aus der Beschichtungsmasse migrieren können. Im Gegensatz zu den nach dem Stand der Technik als Ausgangssubstanzen verwendeten Methylphenylpolysiloxanen lassen sich die cyclischen Siloxane aus den Methylwasserstoffsiloxanen, die als Ausgangssubstanzen zur Herstellung der erfindungsgemäß zu verwendenden Polysiloxane dienen, in einfacher Weise, beispielsweise destillativ, entfernen. Dies führt zu einer wesentlichen Verbesserung der Eigenschaften der erfindungsgemäßen, die Glasfaser umhüllenden Beschichtungsmassen. Diese behalten auch bei langzeitiger Temperaturbelastung ihre geforderten elastisch-plastischen Eigenschaften unverändert bei. Ferner treten keinerlei Haftungsprobleme mit der zweiten Beschichtung auf.

Die erfindungsgemäßen Acrylsäureestergruppen enthaltenden Organopolysiloxane können in der Weise hergestellt werden, daß zunächst an ein Halogen- oder Alkoxywasserstoffpolysiloxan der allgemeinen Formel

$$(R^1_a H_{b+c})-\underset{\underset{\textstyle O_{\frac{4-(a+b+c+d)}{2}}}{|}}{Si}-X_d \qquad (I),$$

wobei $R^1$, a, b, c und d wie vorstehend angegeben definiert sind, und X Halogen oder Alkoxy mit 2 bis 4 Kohlenstoffatomen bedeutet,

b Mol eines geradkettigen, verzweigten oder cyclischen Olefins mit 5 bis 18 Kohlenstoffatomen und/oder c Mol einer Aralkylen-Verbindung der allgemeinen Formel

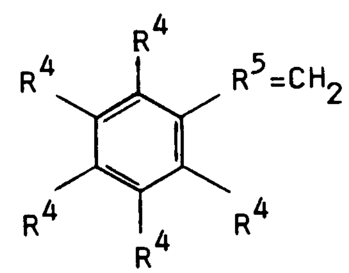

in - für die Anlagerung von olefinischen Gruppen an SiH-Gruppen - an sich bekannter Weise angelagert werden und das dabei erhaltene Produkt der allgemeinen Formel

$$(R^1_aR^2_bR^3_c)-\underset{\underset{O_{\frac{4-(a+b+c+d)}{2}}}{|}}{Si}-X_d \qquad (II)$$

anschließend mit mindestens d Mol eines (Meth-)Acrylsäureesters der Formel Q-H, wobei Q wie vorstehend angegeben definiert ist, in an sich bekannter Weise umgesetzt wird.

Das Herstellungsverfahren weist somit drei Stufen auf. In der ersten Stufe wird das Siloxan von flüchtigen Anteilen befreit. In der zweiten Stufe werden zunächst an Halogen- oder Alkoxywasserstoffpolysiloxane der allgemeinen Formel I Olefine mit 5 bis 18 Kohlenstoffatomen und/oder aromatische Kohlenwasserstoffe mit einer Alkenylgruppe angelagert. Die Anlagerung erfolgt dabei in einer Weise, wie sie für die Anlagerung von Verbindungen mit olefinischen Gruppen an SiH-Gruppen bekannt ist. Derartige Anlagerungen werden im allgemeinen in Gegenwart von Platinkatalysatoren, beispielsweise $H_2PtCl_6$, und gegebenenfalls bei erhöhten Temperaturen bis etwa 150 °C durchgeführt.

Als Olefine sind $\alpha$-Olefine bevorzugt, wobei auch Olefingemische, soweit sie die Bedingung der Kohlenstoffanzahl erfüllen, verwendet werden können. Als aromatische Kohlenwasserstoffe mit einer Alkenylgruppe kommen insbesondere Styrol, $\alpha$-Methylstyrol, p-Bromstyrol und Allylbenzol in Frage.

In der dritten Verfahrensstufe werden die erhaltenen Zwischenprodukte der Formel II mit mindestens d Mol (Meth-)Acrylsäureester Q-H in an sich bekannter Weise umgesetzt. Die Umsetzung kann dabei entsprechend dem in der DE-PS 27 47 233 geschilderten Verfahren erfolgen. Dabei werden zweckmäßig Katalysatoren, wie Titansäureester und Isopropyl- oder Isobutyltitanat, eingesetzt, und es werden erhöhte Temperaturen, insbesondere Temperaturen von 120 bis 150 °C, für die Umsetzung eingehalten. Zweckmäßig werden Polymerisationsinhibitoren, wie Hydrochinon, zugesetzt. Ist der Rest X ein Halogenrest, so wird der entsprechende Halogenwasserstoff zweckmäßig durch Einleiten von Ammoniak oder Zugabe von Alkalien, wie Natriumcarbonat, neutralisiert. Ist X ein Alkoxyrest mit 2 bis 4 Kohlenstoffatomen, so entweicht bei den eingehaltenen Reaktionstemperaturen der freigesetzte niedere Alkohol aus dem Reaktionsgemisch.

Die Organopolysiloxane können allein oder in Mischung mit anderen zur Copolymerisation befähigten ungesättigten Verbindungen, wie mono-, oligo- oder polymeren Epoxy-, Ether-, Ester- und Urethanacrylaten bzw. -methacrylaten sowie Estern ungesättigter Dicarbonsäuren, Allylestern und anderen vinylischen Verbindungen, wie Vinylaromaten oder Vinyllactamen, verwendet werden.

Die Härtung der Organopolysiloxane erfolgt durch energiereiche Strahlung. Bei der Härtung mit ultravioletter Strahlung ist es erforderlich, den Organopolysiloxanen einen Radikalstarter, vorzugsweise in Mengen von 2 bis 10 Gew.-%, bezogen auf modifiziertes Siloxan, zuzusetzen. Die Wahl des Radikalstarters kann entsprechend dem Wellenlängenspektrum der zur Aushärtung verwendeten UV-Strahlenquelle erfolgen. Derartige Radikalstarter sind bekannt. Man kann beispielsweise Benzophenon, dessen Oxime, oder Benzoinether, jedoch auch andere hierfür bekannte Verbindungen verwenden. Ohne Zusatz von Initiatoren lassen sich die erfindungsgemäßen Organopolysiloxane beispielsweise durch Laserlicht, Elektronenstrahlen und $\gamma$-Strahlen aushärten.

Die Beschichtungsmassen, die in hervorragender Weise alle Anforderungen, die an eine Primärbeschichtung für optische Glasfasern zu stellen sind, erfüllen, können in an sich bekannter Weise compoundiert, verarbeitet und gehärtet werden. Dabei können auch Modifizierungsmittel mitverwendet werden, wie sie beispielsweise aus der DE-AS 26 02 809 und der DE-OS 32 18 675 bekannt sind.

Anhand von Ausführungsbeispielen soll die Erfindung noch näher erläutert werden.

Beispiel 1

Herstellung von $\alpha$, $\omega$-Di(pentaerythrittriacrylat)-polydimethyl-(hexyl-methyl)-(2-phenylpropyl-methyl)siloxan der mittleren Formel

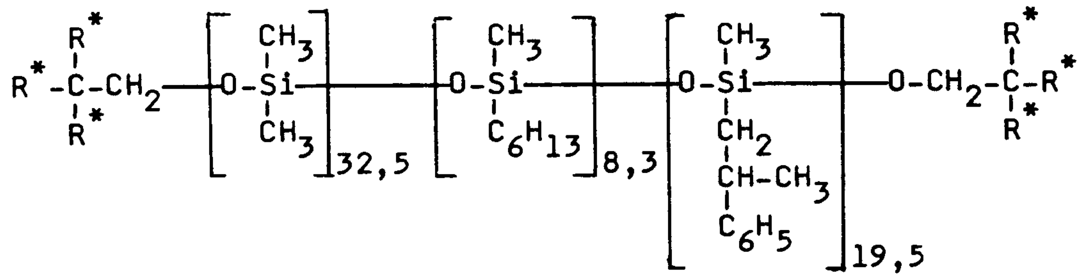

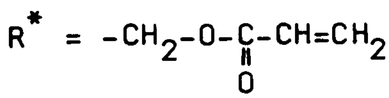

1. Verfahrensstufe

Die flüchtigen Bestandteile des eingesetzten α, ω-Dichlorpolymethylhydrogensiloxans (zur näheren Charakterisierung siehe die 2. Verfahrensstufe) werden am Rotationsverdampfer bei 130 °C und 30 mbar abgezogen.

2. Verfahrensstufe

In einem 500 ml 4-Halskolben, ausgestattet mit Rückflußkühler (mit $CaCO_3$-Trockenrohr), Thermometer, Tropftrichter, Magnetrührer und Heizbad, werden 150 g eines gemäß der 1. Verfahrensstufe vorbehandelten α, ω-Dichlorpolymethylhydrogensiloxans der durchschnittlichen Formel $Cl(SiMe_2O)_{31,5}$-$(SiHMeO)_{27,8}$-$SiMe_2Cl$ (Me = $CH_3$) und 5 ml einer Lösung von 4 mg $H_2PtCl_6.H_2O$ in 3 ml Glykoldimethylether vorgelegt und auf 100 °C erwärmt. Unter Rühren werden nacheinander 83,6 g α-Methylstyrol (708 mMol) und 25,5 g 1-Hexen (303 mMol) während 6 h so zugetropft, daß die Temperatur 110 °C nicht übersteigt. Nach beendeter Zugabe wird noch 6 h lang bei 110 °C gerührt, danach werden bei 5 mbar und 80 °C Kolbentemperatur die flüchtigen Anteile entfernt. Ausbeute: 246 g (95 % der Theorie).

3. Verfahrensstufe

Zu 150 g Toluol werden 16,5 g Diisopropylamin (163 mMol) gegeben, dann werden bei 70 °C 150 g des gemäß der 2. Verfahrensstufe hergestellten Chlorsiloxans zugetropft und danach wird 1 h bei dieser Temperatur gerührt. Anschließend wird als Inhibitor Kupferpulver (0,2 g) zugesetzt. Danach werden 24,3 g (82 mMol) Pentaerythrittriacrylat zugetropft und dann wird 40 min gerührt. Der entstandene Niederschlag wird abfiltriert und das Filtrat erneut mit 0,2 g Kupferpulver versetzt. Das Lösungsmittel wird im Wasserstrahlvakuum bis zu einer maximalen Sumpftemperatur von 80 °C abdestilliert. Zum Schluß erfolgt eine Druckfiltration über eine Presse. Ausbeute: 154,2 g; $n_D^{25}$ = 1,4820.

Beispiel 2

Herstellung von, α, ω-Di(pentaerythrittriacrylat)-polydimethyl-(2-phenylpropyl-methyl)siloxan der mittleren Formel

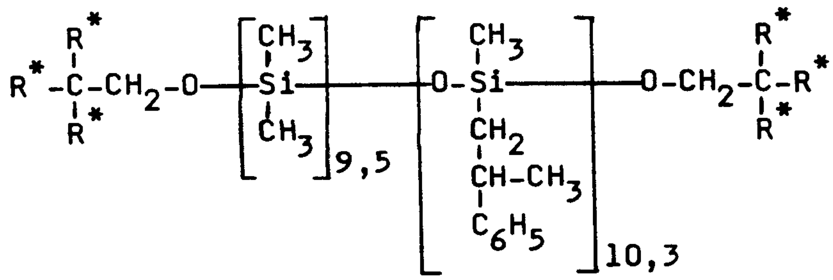

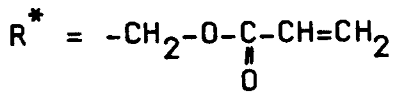

1. Verfahrensstufe

Die flüchtigen Bestandteile des eingesetzten α, ω-Dichlorpolymethylhydrogensiloxans (zur näheren Charakterisierung siehe die 2. Verfahrensstufe) werden am Rotationsverdampfer bei 130 °C und 30 mbar abgezogen.

2. Verfahrensstufe

In einer Apparatur entsprechend Beispiel 1 werden 100 g eines Dichlorpolymethylhydrogensiloxans der durchschnittlichen Formel $Cl(SiMe_2O)_{8,5}$-$(SiHMeO)_{10,3}$-$SiMe_2Cl$ (Me = $CH_3$) mit 84,6 g α-Methylstyrol (716 mMol) umgesetzt und aufgearbeitet; Ausbeute: 176,8 g (95,8 % der Theorie).

3. Verfahrensstufe

In entsprechender Weise wie in der 3. Verfahrensstufe nach Beispiel 1 werden 150 g Chlorsiloxan in 100 g Toluol unter Verwendung von 50 g Diisopropylamin und 0,3 g Kupferpulver mit 73,1 g Pentaerythrittriacrylat zur Reaktion gebracht. Nach analoger Aufarbeitung wie in Beispiel 1 werden 144,4 g eines Produkts mit $n_D^{20}$ = 1,4908 erhalten.

Beispiel 3

Herstellung von, α, ω-Di(trimethylolpropandiacrylat)-polydimethyl-(dodecyl-methyl)siloxan der mittleren Formel

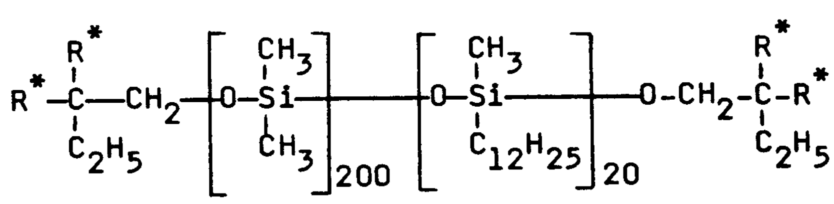

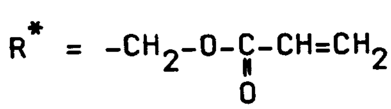

1. Verfahrensstufe

Die flüchtigen Bestandteile des eingesetzten α, ω-Dichlorpolymethylhydrogensiloxans (zur näheren Charakterisierung siehe die 2. Verfahrensstufe) werden am Rotationsverdampfer bei 130 °C und 30 mbar abgezogen.

2. Verfahrensstufe

In einer Apparatur entsprechend Beispiel 1 werden 150 g eines α, ω-Dichlorpolymethylhydrogensiloxans der durchschnittlichen Formel $Cl(SiMe_2O)_{199}-(SiHMeO)_{20}-SiMe_2Cl$ (Me = $CH_3$) mit 31,6 g Dodecen-1 (187 mMol) umgesetzt und aufgearbeitet; Ausbeute: 176.1 g (97,0 % der Theorie).

3. Verfahrensstufe

In entsprechender Weise wie in Beispiel 1 werden 150 g Chlorsiloxan in 100 g Toluol unter Verwendung von 3,1 g Diisopropylamin und 0,3 g Kupferpulver mit 3,8 g Trimethylolpropandiacrylat zur Reaktion gebracht. Nach analoger Aufarbeitung wie in Beispiel 1 werden 130,2 g Endprodukt erhalten.

Beispiel 4

Prüfung der Hydrolysestabilität

Zu einem Gemisch aus Siliconacrylaten, bestehend aus 70 % des nach Beispiel 1 hergestellten Siliconacrylats mit einer durchschnittlichen Kettenlänge von n = 60 und 30 % eines analog hergestellten Produktes mit n = 100 (n = durchschnittliche Anzahl der Siloxaneinheiten), mit einem Acrylatgehalt von 0,06 mol/100 g und einem Brechungsindex von $n_D^{25}$ = 1,483 werden 4 % eines käuflichen Photoinitiatorgemisches (Tego Photoinitiator A4 der Fa. Th. Goldschmidt AG) zugegeben, dann wird im Vakuum bei Raumtemperatur homogenisiert und anschließend das Beschichtungsmaterial in einer Schichtdicke von 200 ± 5 µm auf Siliciumscheiben (Durchmesser: 10 cm) aufgeschleudert. Die UV-Härtung erfolgt mit einer Fusion-Bestrahlungsanlage mit Hg-Bulbs und elliptischem Reflektor unter Stickstoffatmosphäre. Die vom Siliciumträger abgezogenen Folien werden horizontal auf Teflonträgern im Klimaschrank (40 °C, 92 % relative Luftfeuchtigkeit) gelagert. Nach 3 Wochen werden Proben entnommen und 24 h bei Raumtemperatur aufbewahrt, und dann wird durch Zug-Dehnungsmessungen an einem Instron-Gerät (Probengeometrie: 50 x 5 mm) der E-Modul bei 2 % Dehnung bestimmt. Dabei wird eine Abnahme des Ausgangs-E-Moduls von 0,73 $N/mm^2$ um 5 % gemessen.

Beispiel 5

Prüfung der Härtungsgeschwindigkeit

Das Polyorganosiloxan entsprechend Beispiel 1 (60 Siloxaneinheiten) mit einer Viskosität von 4400 mPa.s bei 25 °C, einem Brechungsindex von $n_D^{25}$ = 1,482 und einem Acrylatgehalt von 0,07 mol/100 g wird mit 4 % eines käuflichen Photoinitiatorgemisches versetzt, im Vakuum homogenisiert und in einer Schichtdicke von 100 ± 3 µm auf Siliciumscheiben aufgeschleudert. Die beschichteten Scheiben werden unter Schutzgas auf einem Band unter einer Fusion-Bestrahlungsanlage mit Hg-Bulbs und elliptischem Reflektor vorbeigeführt. Jeder Durchlauf entspricht einer Bestrahlungsdauer von 0,1 s. Nach 24stündiger Lagerung der bestrahlten Proben bei Raumtemperatur werden diese vom Siliciumträger abgezogen und in Streifen mit der Abmessung 50 x 5 x 0,1 mm geschnitten, und dann wird der E-Modul an einer Instron-Zugprüfmaschine bei 2 % Dehnung bestimmt. Wie aus der folgenden Tabelle ersichtlich, werden bereits nach einer Bestrahlungszeit von 0,4 s 94 % vom maximalen E-Modul von 1,41 $N/mm^2$ erreicht.

| Bestrahlungszeit [s] | E-Modul Siliconacrylat [$N/mm^2$] |
|---|---|
| 0,1 | 0,82 |
| 0,2 | 0,92 |
| 0,4 | 1,32 |
| 3,2 | 1,41 |

Beispiel 6

Untersuchung der thermisch-mechanischen Eigenschaften

400 µm dicke UV-gehärtete Folien, hergestellt aus den in Beispiel 1 bzw. Beispiel 4 beschriebenen Siliconacrylaten, werden im dynamisch-mechanischen Spektrometer Polymer DMTA vermessen. Die Proben werden unter 3-Punkt-Halterung mit einer Frequenz von 1 Hz bei einer Heizrate von 5 K/min belastet. Dabei ergibt sich für das gemäß Beispiel 4 gehärtete Siliconacrylat eine Glasübergangstemperatur von -60 °C. Bei einem Vergleich des dynamisch-mechanischen Verhaltens des Siliconacrylats entsprechend Beispiel 1 mit demjenigen eines kommerziellen, als Primärbeschichtung verwendeten Urethanacrylats (De Soto-Produkt 950 X 65) ergibt sich, daß das erfindungsgemäße Siliconacrylat eine Glasübergangstemperatur von -55 °C und einen konstanten Speichermodul E' im Temperaturbereich von -40 °C bis +100 °C besitzt, während das kommerzielle Urethanacrylat eine Glasübergangstemperatur von 0 °C und einen konstanten Speichermodul oberhalb +30 °C aufweist.

Beispiel 7

Beschichtung einer Glasfaser und Untersuchung der beschichteten Faser

An einem Faserziehturm wurde aus einer Preform eine Monomodefaser mit einem Außendurchmesser von 125 µm gezogen und mittels einer Küvette mit dem erfindungsgemäßen UV-härtbaren Siliconacrylat entsprechend Beispiel 1 versehen. Das Siliconacrylat ließ sich tropfenfrei in einer Schichtdicke von ca. 37 µm aufbringen, entsprechend einem Außendurchmesser der primärbeschichteten Faser von 200 µm. Zum mechanischen Schutz der Faser wurde mittels einer zweiten Küvette ein handelsübliches UV-härtbares Urethanacrylat als Sekundärbeschichtung in einer Schichtstärke von 25 µm aufgebracht. Die doppelt beschichtete Faser hatte einen Außendurchmesser von 250 µm. Zwischen den Beschichtungsküvetten sowie nach der zweiten Beschichtungsküvette durchlief die Faser eine UV-Strecke von insgesamt 75 cm mit rotationselliptischen Reflektoren und einer Lampenleistung von 120 Watt/cm. Während der Härtung wurde mit Stickstoff gespült. Die Ziehgeschwindigkeit betrug 2 m/s. Dämpfungsmessungen ergaben die für Monomodefasern üblichen Dämpfungswerte < 0,5 dB/km.

Proben der beschichteten Faser wurden einer Lagerung im Klima 40 °C/92 % relative Luftfeuchtigkeit sowie bei einer Temperatur von 100 °C unterzogen. Beurteilungskriterium für das Verhalten der Beschichtung während der Belastung war der Schrumpf, bestimmt aus der Änderung des Fasergesamtdurchmessers. Bei der Klimalagerung wurde nach 8 Wochen ein Schrumpf von nur 2 %, bei der Temperaturlagerung keine Änderung festgestellt.

**Patentansprüche**

**1.** Optische Glasfaser mit einer Primärbeschichtung, welche wenigstens teilweise aus acrylsäureestergruppenhaltigen, an Silicium gebundene Alkylgruppen aufweisenden Organopolysiloxanen besteht, wobei die bei Applikationstemperatur flüssigen Organopolysiloxane durch energiereiche Strahlung polymerisiert sind, **dadurch gekennzeichnet,** daß die Organopolysiloxane Verbindungen entsprechend der allgemeinen Formel

$$(R^1_aR^2_bR^3_c)-\underset{\underset{O_{\frac{4-(a+b+c+d)}{2}}}{|}}{Si}-Q_d$$

sind, wobei folgendes gilt:

$R^1$ = Methyl,

$R^2$ = geradkettiger, verzweigter oder cyclischer Alkylrest mit 5 bis 18 Kohlenstoffatomen, der gegebenenfalls mit Halogen substituiert sein kann,

$R^3$ = Aralkyl folgender Struktur:

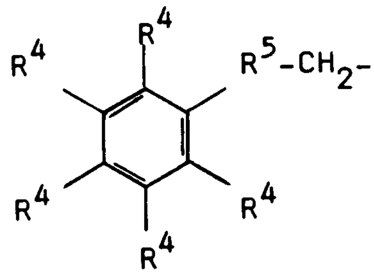

mit

$R^4$ = Wasserstoff und/oder Alkyl mit 1 bis 12 Kohlenstoffatomen und/oder Halogen, und

$R^5$ = Alkylen mit 1 bis 8 Kohlenstoffatomen (geradkettig oder verzweigt),

Q = über das Sauerstoffatom einer um das Wasserstoffatom verminderten Hydroxylgruppe an Silicium gebundener mehrfacher Acryl- und/oder Methacrylsäureester eines Polyols aus der Gruppe Pentaerythrit, Trimethylolethan, Trimethylolpropan und Glycerin sowie deren Dimere und/oder Oxyalkylenderivate mit 1 bis 10 Oxyethylen- und/oder Oxypropyleneinheiten,

$a \geqq 0{,}9 \geqq b + c$,

b, c = 0 bis 1,1,

$b + c \geqq 0{,}1$,

$\Sigma$ a, b, c = 1,8 bis 2,2, und

d = 0,001 bis 1,6,

und daß die Organopolysiloxane höchstens 4 Gew.-% an bei 130 °C/30 mbar flüchtigen Anteilen enthalten.

**2.** Optische Glasfaser nach Anspruch 1, **dadurch gekennzeichnet**, daß der Rest Q der Organopolysiloxane der um das Wasserstoffatom einer Hydroxylgruppe verminderte Rest einer Verbindung aus der Gruppe Pentaerythrittriacrylat, Dipentaerythritpentaacrylat, Trimethylolethandiacrylat, Ditrimethylolethantriacrylat, Trimethylolpropandiacrylat, Ditrimethylolpropantriacrylat, Glycerindiacrylat, Diglycerintriacrylat oder von deren Oxyalkylenderivaten mit 1 bis 10 Oxyethylen- oder Oxypropyleneinheiten ist.

**3.** Optische Glasfaser nach Anspruch 1 oder 2, **dadurch gekennzeichnet**, daß der Rest $R^3$ der Organopolysiloxane ein gegebenenfalls halogen- oder alkylsubstituierter Phenylethyl- oder Phenylpropylrest ist.

**Claims**

**1.** Optical glass fibre having a primary coating at least partially comprising organo-polysiloxanes having alkyl groups bound to silicon and containing acrylic acid ester groups, where the organo-polysiloxanes which are liquid at application temperature are polymerised by high-energy radiation, characterised in that the organo-polysiloxanes are compounds corresponding to the general formula

$$(R^1_a\ R^2_b\ R^3_c)-\underset{\displaystyle O_{\frac{4-(a+b+c+d)}{2}}}{\underset{|}{Si}}-Q_d$$

where the following applies:

$R^1$ = methyl

$R^2$ = straight-chain, branched or cyclic alkyl residue with 5 to 18 carbon atoms, which can optionally be substituted with halogen,

$R^3$ = aralkyl of the following structure:

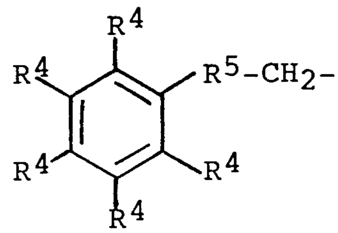

where

$R^4$ = hydrogen and/or alkyl with 1 to 12 carbon atoms and/or halogen, and

$R^5$ = alkylene with 1 to 8 carbon atoms (straight-chain or branched),

Q = a multiple acrylic- and/or methacrylic acid ester of a polyol from the group pentaerythritol, trimethylolethane, trimethylolpropane and glycerin, as well as their dimers and/or oxyalkylene derivatives with 1 to 10 oxyethylene-and/or oxypropylene units, which ester is bound to silicon through the oxygen atom of a hydroxyl group minus the hydrogen atom

$a \geqq 0.9 \geqq b + c$

$b,c = 0$ to 1.1

$b + c \geqq 0.1$

$\Sigma$ a, b,c = 1.8 to 2.2, and

d = 0.001 to 1.6

and in that the organo-polysiloxanes contain at the most 4% by weight of components volatile at 130 °C/30 m bar.

2. Optical glass fibre according to claim 1, characterised in that the residue Q of the organo polysiloxane is the residue minus the hydrogen atom of a hydroxyl group of a compound from the group pentaerythritol triacrylate, dipentaerythritol pentaacrylate, trimethylolethane diacrylate, ditrimethylolethane triacrylate, trimethylolpropane diacrylate, ditrimethylolpropane triacrylate, glycerin diacrylate, diglycerin triacrylate or their oxyalkylene derivatives with 1 to 10 oxyethylene or oxypropylene units.

3. Optical glass fibre according to claim 1 or 2, characterised in that the residue $R^3$ of the organo-polysiloxane is a optionally halogen or alkyl substituted phenylethyl or phenylpropyl residue.

## Revendications

1. Fibre optique ayant un revêtement primaire, qui est constitué au moins partiellement d'organopolysiloxanes possédant des groupes acrylate et comportant des groupes alcoyle reliés au silicium, les organopolysiloxanes liquides à la température d'application étant polymérisés par un rayonnement riche en énergie, caractérisée en ce que les organopolysiloxanes répondent à la formule générale

$$(R^1_a R^2_b R^3_c)-\underset{|}{Si}-Q_d \quad O_{\frac{4-(a+b+c+d)}{2}}$$

dans laquelle :

$R^1$ = méthyle,

$R^2$ = radical alcoyle à chaîne linéaire, ramifiée ou cyclique ayant de 5 à 18 atomes de carbone, qui peut être éventuellement substitué par un halogène,

$R^3$ = aralcoyle ayant la structure suivante :

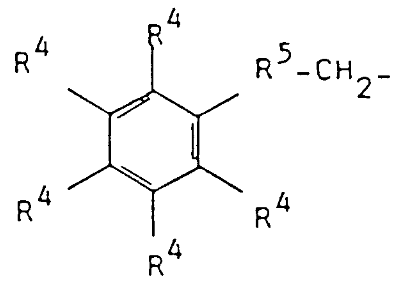

avec

$R^4$ = hydrogène et/ou alcoyle ayant de 1 à 12 atomes de carbone et/ou halogène, et

$R^5$ = alcoylène ayant de 1 à 8 atomes de carbone (à chaîne linéaire ou ramifiée),

Q = acrylate et/ou méthacrylate multiple, relié au silicium par l'atome d'oxygène d'un groupe hydroxyle amoindri de l'atome d'hydrogène, d'un polyol choisi parmi le pentaérythrite, le triméthyloléthane, le triméthylolpropane et la glycérine, ainsi que leurs dimères et/ou leurs dérivés oxyalcoylénés ayant de 1 à 10 motifs d'oxyde d'éthylène et/ou d'oxyde de propylène,

$a \geqq 0,9 \geqq b + c$,

b, c = 0 à 1,1,

$b + c \geqq 0,1$,

Σa, b, c = 1,8 à 2,2, et

d = 0,001 à 1,6,

et en ce que les organopolysiloxanes contiennent au plus 4 % en poids de parties volatiles à 130 °C et sous 30 mbar.

2. Fibre optique suivant la revendication 1, caractérisée en ce que le radical Q des organopolysiloxanes est le radical, amoindri de l'atome d'hydrogène d'un groupe hydroxyle, d'un composé choisi parmi le triacrylate de pentaérythrite, le pentaacrylate de dipentaérythrite, le diacrylate de triméthyloléthane, le triacrylate de ditriméthoIéthane, le diacrylate de triméthylolpropane,, le triacrylate de ditriméthylolpropane, le diacrylate de glycérine, le triacrylate de diglycérine ou leurs dérivés oxyalcoylénés ayant de 1 à 10 motifs d'oxyde d'éthylène ou d'oxyde de propylène.

3. Fibre optique suivant la revendication 1 ou 2, caractérisée en ce que le radical $R^3$ des organopolysiloxanes est un radical phényléthyle ou phénylpropyle éventuellement à substitution halogène ou alcoyle.